# EUROPEAN PATENT APPLICATION

(11) **EP 4 818 252 A1**
(43) Date of publication of application: **07.10.2026**
(21) Application number: 25167591.4
(22) Date of filing: 31.03.2025
(51) Int. Cl.: C08L 23/12, C08F 210/06

(54) **POLYPROPYLENE COMPOSITION FOR AUTOMOTIVE APPLICATIONS**

(71) Applicant: Borealis GmbH, 1020 Vienna (AT)
(72) Inventor: KNIESEL, Claudia, 4021 Linz (AT); LUMMERSTORFER, Thomas, 4021 Linz (AT); ABBASI, Mahdi, 4021 Linz (AT)
(74) Representative: Maiwald GmbH

(57) **Abstract**

The present invention relates to a polypropylene composition comprising a heterophasic propylene-ethylene copolymer having a melt flow rate MFR₂ in the range of from 50 to 250 g/10 min, a mixed plastics polypropylene blend originating from post-consumer waste and/or post-industrial waste and having a melt flow rate MFR₂, in the range of from 10 to 50 g/10 min, an elastomer of ethylene and one or more alpha-olefin comonomer(s) having from 4 to 10 carbon atoms, having a melt temperature of from 100 to 135°C, and a glass transition temperature Tg of from -45 to -75°C,, an inorganic filler and additives,
an article comprising said polypropylene composition and
the use of said polypropylene composition for injection molding of articles.

## Description

The present invention relates to a polypropylene composition comprising a heterophasic propylene-ethylene copolymer having a melt flow rate MFR₂ in the range of from 50 to 250 g/10 min, a mixed plastics polypropylene blend originating from post-consumer waste and/or post-industrial waste and having a melt flow rate MFR₂, in the range of from 10 to 50 g/10 min, an elastomer of ethylene and one or more alpha-olefin comonomer(s) having from 4 to 10 carbon atoms, having a melt temperature of from 100 to 135°C, and a glass transition temperature Tg of from -45 to -75°C, an inorganic filler and additives, an article comprising said polypropylene composition and the use of said polypropylene composition for injection molding of articles.

### Technical Background

The transition from a linear to a circular economy has led to the adoption of post-consumer polypropylene recyclates (PP-PCR) in automotive compounds, gradually replacing portions of the virgin polypropylene (PP-V) previously used. PP-PCR can be produced from different feedstocks such as packaging waste or end-of-life vehicles (ELV). Purification and decontamination steps are needed to convert the waste to polymer-specific recyclates complying with the high-performance standards of the automotive industry. However, integrating PP-PCR into automotive compounds still presents several technical hurdles related to surface aspect, mechanical properties and emission-fogging-odour (EFO) properties, among others.

Concerning mechanical properties, the toughness at low temperatures poses a significant challenge that often hinders the use of PP-PCR in advanced automotive compounds. The issue stems either from the problematic composition of PP-PCR, especially if it originates from packaging waste, or from impurities which trigger crack formation, especially in cold conditions.

The need to add increasing fractions of PP-PCR to automotive compounds, combined with the above-mentioned challenges, generates a need for compounds that a) contain PP-PCR- in high overall proportions and b) still exhibit good impact performance, especially at low temperatures (-20°C to -30°C).

WO 2024/184334 discloses a polypropylene composition comprising post-consumer polypropylene recyclates (PP-PCR), which show sufficient impact performance in form of Charpy notched impact strength, which however leaves room for improvement especially at low temperatures.

Thus, there is a need in the art for polypropylene compositions, which comprise polypropylene based blends which originate from post-consumer and/or post-industrial recycling streams, which show an improved toughness and impact performance especially at low temperatures.

It has surprisingly been found by introducing elastomers of ethylene and one or more alpha-olefin comonomer(s) having from 4 to 10 carbon atoms having a rather high melting temperature Tm in the range of from 100 to 135°C and a rather low glass transition temperature Tg in the range of from -45 to -75°C in amounts of from 15.0 to 35.0 wt.-% to a polypropylene composition comprising a mixed plastics polypropylene blend originating from post-consumer waste and/or post-industrial waste, the balance of properties of the polypropylene composition can be improved so that a high toughness and impact performance, especially at low temperatures of -20°C or -30°C, e.g. measured as tensile strain at break, Charpy notched impact strength, e.g. at -20°C, or puncture energy, e.g. at -30°C, together with good mechanical properties, e.g. measured as flexural modulus or tensile properties, such as tensile modulus and tensile stress at yield, high flowability, e.g. measured as melt flow rate, and high dimensional stability, e.g. measured as shrinkage or CTLE is achieved. These polypropylene compositions are especially suitable for injection moulding application, especially in the automotive field.

### Summary of the Invention

In a first aspect, the present invention relates to a polypropylene composition obtainable by blending at least components (A) to (E):
(A) from 15.0 to 45.0 wt.-%, preferably from 20.0 to 40.0 wt.-%, more preferably from 25.0 to 35.0 wt.-%, based on the total weight of the polypropylene composition, of a heterophasic propylene-ethylene copolymer having a melt flow rate MFR₂, determined according to ISO 1133 at 230°C and 2.16 kg, in the range of from 50 to 250 g/10 min, preferably from 75 to 200 g/10 min, more preferably from 90 to 150 g/10 min;
(B) from 7.5 to 35.0 wt.-%, preferably from 10.0 to 30.0 wt.-%, more preferably from 15.0 to 25.0 wt.-%, based on the total weight of the polypropylene composition, of a mixed plastics polypropylene blend originating from post-consumer waste and/or post-industrial waste and having a melt flow rate MFR₂, determined according to ISO 1133 at 230°C and 2.16 kg, in the range of from 10 to 50 g/10 min, preferably from 15 to 47.5 g/10 min, more preferably from 20 to 45.0 g/10 min;
(C) from 15.0 to 35.0 wt.-%, preferably from 17.5 to 32.5 wt.-%, more preferably from 20.0 to 30.0 wt.-%, based on the total weight of the polypropylene composition, of an elastomer of ethylene and one or more alpha-olefin comonomer(s) having from 4 to 10 carbon atoms, having a melt temperature of from 100 to 135°C, preferably from 105 to 130°C, more preferably from 110 to 125°C, determined by differential scanning calorimetry (DSC) according to ISO 11357 / part 3 /method C2 in a heat / cool / heat cycle with a scan rate of 10 °C/min in the temperature range of -30 to +225°C; and a glass transition temperature Tg, determinable by dynamic mechanical analysis (DMA) according to ISO 6721-11, of from -45 to -75°C, preferably from -50 to -70°C, more preferably from -55 to -67°C;
(D) from 10.0 to 35.0 wt.-%, preferably from 15.0 to 32.5 wt.-%, more preferably from 17.5 to 30.0 wt.-%, based on the total weight of the polypropylene composition, of an inorganic filler;
(E) from 0.1 to 5.0 wt.-%, preferably from 0.2 to 4.5 wt.-%, more preferably from 0.3 to 4.0 wt.-% of additives,
wherein components (A), (B), (C), (D) and (E) make up from 90.0 to 100 wt.-%, preferably from 90.0 to 99.9 wt.-% of the polypropylene composition.

In a second aspect, the present invention relates to an article, preferably a moulded article, more preferably a moulded automotive article comprising the polypropylene composition as described above or below, preferably in an amount of at least 95 wt.-%, more preferably at least 98 wt.-%, most preferably at least 99 wt.-%.

In a third aspect, the present invention relates to the use of the polypropylene composition as described above or below for injection molding of articles, preferably automotive articles, more preferably visible or partly visible parts of a vehicle, such as potentially painted automotive exterior parts.

### Definitions

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and claiming the present invention, the following terminology will be used in accordance with the definitions set out below. Unless clearly indicated otherwise, use of the terms "a," "an," and the like refers to one or more.

Mixed plastics is defined as the presence of low amounts of compounds usually not found in virgin polypropylene blends such as polystyrenes, polyamides, polyesters, wood, paper, limonene, aldehydes, ketones, fatty acids, metals, and/or long term decomposition products of stabilizers. Virgin polypropylene blends denote blends as directly originating from the production process without intermediate use.

As a matter of definition "mixed plastics" can be equated with detectable amounts of polystyrene and/or polyamide-6 and/or limonene and/or fatty acids.

Mixed plastics thereby can originate from both post-consumer waste and industrial waste, as opposed to virgin polymers. Post-consumer waste refers to objects having completed at least a first use cycle (or life cycle), i.e. having already served their first purpose. In contrast to that, industrial waste refers to manufacturing scrap, respectively conversion scrap, which does not normally reach a consumer.

The term "virgin" denotes the newly produced materials and/or objects prior to their first use, which have not already been recycled.

The term "recycled material" such as used herein denotes materials reprocessed from "recycled waste".

A polymer blend is a mixture of two or more polymeric components. In general, the blend can be prepared by mixing the two or more polymeric components. A suitable mixing procedures known in the art is post-polymerization blending. Post-polymerization blending can be dry blending of polymeric components such as polymer powders and/or compounded polymer pellets or melt blending by melt mixing the polymeric components.

A mixed-plastic polypropylene blend indicates that the blend predominantly comprises polypropylene; however, small amounts of other plastic are present. Recyclate blends, in particular post-consumer recyclate blends, are almost always mixed-plastic blends, which reflects the efficiency of the sorting in state of the art recycling processes.

A polypropylene means a polymer being composed of units derived from propylene in an amount of more than 50 mol-%.

A polyethylene means a polymer being composed of units derived from ethylene in an amount of more than 50 mol-%.

A propylene homopolymer is a polymer, which essentially consists of propylene monomer units. Due to impurities especially during commercial polymerization processes a propylene homopolymer can comprise up to 0.1 mol% comonomer units, preferably up to 0.05 mol% comonomer units and most preferably up to 0.01 mol% comonomer units.

The term "elastomer" denotes a natural or synthetic polymer having elastic properties. The term "plastomer" denotes a natural or synthetic polymer which combines qualities of elastomers and plastics, such as rubber-like properties with the processing ability of plastic. An ethylene based plastomer means a plastomer being composed of units derived from ethylene in an amount of more than 50 mol%.

A "block chain structure" means that the polymeric chain includes blocks of polymer chain segments which differ in their comonomer content. Blocks of polymer chain segments with high amount of comonomer thereby alternate with blocks of polymer chain segments with low amount of comonomer in the polymeric chain. This means that the comonomer is not randomly distributed over the polymeric chain but accumulates in the blocks of polymer chain segments with high amount of comonomer. The "block chain structure" of an ethylene-1-octene elastomer can be identified and measured by successive self-nucleation and annealing (SSA) as described in G. Urciuoli et. al., Thermal Fractionation of Ethylene/1-Octene Multiblock Copolymer from Chain Shuttling Polymerization, Macromolecules, 2022, 55, 5656-5668.

The presence of a heterophasic nature can be easily determined by the number of glass transition points, like in dynamic-mechanical analysis (DMA), and/or high resolution microscopy, like scanning electron microscopy (SEM), transmission electron microscopy (TEM) or atomic force microscopy (AFM).

Reactor blend is a blend originating from the production in two or more reactors coupled in series or in a reactor having two or more reaction compartments. A reactor blend may alternatively result from blending in solution. A reactor blend stands in contrast to a compound as produced by melt extrusion.

If not indicated otherwise "%" refers to weight-% (wt.-%).

### Detailed Description

### Polypropylene composition

In a first aspect, the present invention relates to a polypropylene composition obtainable by blending at least components (A) to (E):
(A) from 15.0 to 45.0 wt.-%, preferably from 20.0 to 40.0 wt.-%, more preferably from 25.0 to 35.0 wt.-%, based on the total weight of the polypropylene composition, of a heterophasic propylene-ethylene copolymer having a melt flow rate MFR₂, determined according to ISO 1133 at 230°C and 2.16 kg, in the range of from 50 to 250 g/10 min, preferably from 75 to 200 g/10 min, more preferably from 90 to 150 g/10 min;
(B) from 7.5 to 35.0 wt.-%, preferably from 10.0 to 30.0 wt.-%, more preferably from 15.0 to 25.0 wt.-%, based on the total weight of the polypropylene composition, of a mixed plastics polypropylene blend originating from post-consumer waste and/or post-industrial waste and having a melt flow rate MFR₂, determined according to ISO 1133 at 230°C and 2.16 kg, in the range of from 10 to 50 g/10 min, preferably from 15 to 47.5 g/10 min, more preferably from 20 to 45.0 g/10 min;
(C) from 15.0 to 35.0 wt.-%, preferably from 17.5 to 32.5 wt.-%, more preferably from 20.0 to 30.0 wt.-%, based on the total weight of the polypropylene composition, of an elastomer of ethylene and one or more alpha-olefin comonomer(s) having from 4 to 10 carbon atoms, having a melt temperature of from 100 to 135°C, preferably from 105 to 130°C, more preferably from 110 to 125°C, determined by differential scanning calorimetry (DSC) according to ISO 11357 / part 3 /method C2 in a heat / cool / heat cycle with a scan rate of 10 °C/min in the temperature range of -30 to +225°C; and a glass transition temperature Tg, determinable by dynamic mechanical analysis (DMA) according to ISO 6721-11, of from -45 to -75°C, preferably from -50 to -70°C, more preferably from -55 to -67°C;
(D) from 10.0 to 35.0 wt.-%, preferably from 15.0 to 32.5 wt.-%, more preferably from 17.5 to 30.0 wt.-%, based on the total weight of the polypropylene composition, of an inorganic filler;
(E) from 0.1 to 5.0 wt.-%, preferably from 0.2 to 4.5 wt.-%, more preferably from 0.3 to 4.0 wt.-% of additives,
wherein components (A), (B), (C), (D) and (E) make up from 90.0 to 100 wt.-%, preferably from 90.0 to 99.9 wt.-% of the polypropylene composition.

The polypropylene composition according to the present invention is particularly suitable for injection moulding of articles to be used in the exterior of vehicles, such as rocker panels.

The polypropylene composition according to the present invention has one or more of the following characteristics:
The polypropylene composition can be characterized by crystallization extraction (CRYSTEX) analysis. In the crystallization extraction (CRYSTEX) analysis a crystalline fraction (CF) and a soluble fraction (SF) are obtained which can be quantified and analysed in regard of the monomer and comonomer content as well as the intrinsic viscosity (iV).

The polypropylene composition preferably shows one or all of the following properties in the crystallization extraction (CRYSTEX) analysis:
- a crystalline fraction (CF) content determined by crystallization extraction (CRYSTEX) analysis in the range from 62.5 to 85.0 wt.-%, preferably from 65.0 to 82.5 wt.-%, more preferably from 62.5 to 80.0 wt.-%, and
- a soluble fraction (SF) content determined by crystallization extraction (CRYSTEX) analysis in the range from 15.0 to 37.5 wt.-%, preferably from 17.5 to 35.0 wt.-%, more preferably from 20.0 to 32.5 wt.-%.

Generally, the crystalline fraction (CF) content and the soluble (SF) content of a polypropylene composition only relate to its polymeric components, i.e. without other components, which are insoluble and therefore not part of the dissolution and crystallization cycles as described below in the determination method, such as the inorganic filler (D).

The crystalline fraction (CF) content and the soluble (SF) content therefore are based on the weight amount of the polymeric components of the polypropylene composition.

Said crystalline fraction (CF) preferably has one or more, preferably all of the following properties:
- an ethylene content (C2(CF)), determined by quantitative NMR spectroscopy from crystallization extraction (CRYSTEX) analysis, of from 7.5 to 30.0 wt.-%, preferably from 10.0 to 27.5 wt.-%, more preferably from 12.5 to 25.0 wt.-%; and/or
- an intrinsic viscosity (iV(CF)), determined from crystallization extraction (CRYSTEX) analysis, in the range from 0.90 to 2.00 dL/g, preferably from 1.05 to 1.90 dL/g, more preferably from 1.20 to 1.80 dL/g.

Said soluble fraction (SF) preferably has one or more, preferably all of the following properties:
- an ethylene content (C2(SF)), determined by quantitative NMR spectroscopy from crystallization extraction (CRYSTEX) analysis, of from 45.0 to 70.0 wt.-%, preferably from 47.5 to 67.5 wt.-%, more preferably from 50.0 to 65.0 wt.-%; and/or
- an intrinsic viscosity (iV(SF)), determined from crystallization extraction (CRYSTEX) analysis, in the range from 1.25 to 2.50 dL/g, preferably from 1.40 to 2.35 dL/g, more preferably from 1.60 to 2.20 dL/g.

The composition preferably has a ratio of the intrinsic viscosities of the soluble fraction and crystalline fraction (iV(SF)/iV(CF)) in the range of from 0.90 to 1.70, more preferably from 1.00 to 1.60, still more preferably from 1.10 to 1.50.

Still further, the composition preferably has a ratio of the ethylene contents of the soluble fraction and crystalline fraction (C2(SF)/C2(CF)) of 1.5 to 7.5, more preferably in the range of from 2.0 to 6.0, still more preferably in the range of from 2.5 to 5.0.

The polypropylene composition preferably has an ethylene content (C2(total)), determined by quantitative ¹³C-NMR spectroscopy from crystallization extraction (CRYSTEX), in the range from 20.0 to 40.0 wt.-%, more preferably from 22.5 to 37.5 wt.-%, still more preferably from 25.0 to 35.0 wt.-%.

Further, the polypropylene composition preferably has an intrinsic viscosity (iV(total), determined from crystallization extraction (CRYSTEX) analysis, in the range from 1.00 to 2.10 dL/g, more preferably from 1.15 to 2.00 dL/g, still more preferably from 1.30 to 1.90 dL/g.

The polypropylene composition according to the invention preferably shows a superior balance of properties in regard of flowability, as can be seen from the melt flow rate, stiffness, such as in regard of the tensile properties, thermal stability, measured as coefficient of linear thermal expansion (CTLE), and especially impact properties and toughness especially at low temperature, measured e.g. as nominal tensile strain at break, Charpy notched impact strength and puncture energy.

The polypropylene composition preferably has a melt flow rate MFR₂, determined according to ISO 1133 at 230°C and 2.16 kg, in the range of from 5.0 to 40.0 g/10 min, more preferably from 7.5 to 35.0 g/10 min, still more preferably from 10.0 to 30.0 g/10 min.

Further, the polypropylene composition preferably has a flexural modulus, determined according to ISO 178 using 80 x 10 x 4 mm³ injection moulded specimens prepared according to ISO 19069-2, of from 1250 to 2000 MPa, more preferably from 1500 to 1900 MPa, still more preferably from 1650 to 1850 MPa.

Still further, the polypropylene composition preferably has a tensile modulus, determined according to ISO 527-2 using injection moulded specimens of tensile type 1A prepared in accordance with ISO 19069-2, of from 1100 to 1850 MPa, more preferably from 1250 to 1750 MPa, still more preferably from 1400 to 1650 MPa.

Furthermore, the polypropylene composition preferably has a tensile stress at yield, determined according to ISO 527-2 using injection moulded specimens of tensile type 1A prepared in accordance with ISO 19069-2, of from 10.0 to 25.0 MPa, more preferably from 12.5 to 22.5 MPa, still more preferably from 15.0 to 20.0 MPa.

Additionally, the polypropylene composition preferably has a nominal tensile strain at break, determined according to ISO 527-2 using injection moulded specimens of tensile type 1A prepared in accordance with ISO 19069-2, of from 150 to 600 %, more preferably from 200 to 550 %, still more preferably from 250 to 500 %.

Further, the polypropylene composition preferably has a Charpy notched impact strength at 23°C, determined according to ISO 179/1eA using 80 x 10 x 4 mm³ injection moulded specimens prepared according to ISO 19069-2, of from 35.0 to 60.0 kJ/m², more preferably from 40.0 to 55.0 kJ/m², still more preferably from 42.5 to 52.5 kJ/m².

Still further, the polypropylene composition preferably has a Charpy notched impact strength at -20°C, determined according to ISO 179/1eA using 80 x 10 x 4 mm³ injection moulded specimens prepared according to ISO 19069-2, of from 3.5 to 15.0 kJ/m², more preferably from 5.0 to 12.5 kJ/m², still more preferably from 7.5 to 11.5 kJ/m².

Furthermore, the polypropylene composition preferably has a puncture energy of from 25.0 to 65.0 J, more preferably from 30.0 to 60.0 J, still more preferably from 32.5 to 55.0 J, determined in the instrumented falling weight test according to ISO 6603-2 at 23 °C.

Additionally, the polypropylene composition preferably has a puncture energy of from 20.0 to 65.0 J, more preferably from 22.5 to 60.0 J, still more preferably from 25.0 to 55.0 J, determined in the instrumented falling weight test according to ISO 6603-2 at -30 °C.

It is preferred that the polypropylene composition has a relation of nominal tensile strain at break (TSB) and puncture energy at -30°C (PE (-30°C)) according to the following formula(s): $TSB \left[{%}^{- 1}\right] > 2.0 ⋅ PE \left(-30°C\right) \left[{J}^{- 1}\right] + 50.0$ (I), more preferably $TSB \left[{%}^{- 1}\right] > 4.0 ⋅ PE \left(-30°C\right) \left[{J}^{- 1}\right] + 50.0$ (Ia) still more preferably $TSB \left[{%}^{- 1}\right] > 6.0 ⋅ PE \left(-30°C\right) \left[{J}^{- 1}\right] + 50.0$ (Ib).

Further, the polypropylene composition preferably has a coefficient of linear thermal expansion in machine direction from -30 to + 80 °C (CLTE-MD, -30 to +80°C) of from 25 to 65 µm/mK, more preferably from 30 to 60 µm/mK, still more preferably from 35 to 55 µm/mK.

Still further, the polypropylene composition preferably has a coefficient of linear thermal expansion in transverse direction from -30 to + 80 °C (CLTE-TD, -30 to +80°C) of from 20 to 55 µm/mK, more preferably from 25 to 50 µm/mK, still more preferably from 30 to 45 µm/mK.

The polypropylene composition of the invention mandatorily comprises components (A), (B), (C), (D) and (E) as described above or below in the accordantly described amounts.

Components (A), (B), (C), (D) and (E) thereby make up from 90.0 to 100 wt.-%, more preferably from 90.0 to 99.9 wt.-% of the polypropylene composition.

The polypropylene composition thereby comprises additives (E) in an amount of from 0.1 to 5.0 wt.-%, preferably from 0.2 to 4.5 wt.-%, more preferably from 0.3 to 4.0 wt.-%, based on the total weight of the polypropylene composition.

Typically additives would be selected from antioxidants, anti-slip agents, nucleating agents, anti-scratch agents, anti-scorch agents, metal deactivators, UV-stabilisers, acid scavengers, lubricants, anti-static agents and the like, as well as combinations thereof. These additives are well known in the polymer industry and their use will be familiar to the skilled practitioner. Any additives, which are present, may be added as an isolated raw material or in a mixture with a carrier polymer, i.e. in a so-called master batch.

The polypropylene composition preferably further comprises a pigment masterbatch in an amount of from 0.1 to 10.0 wt.-%, more preferably in the range from 2.0 to 10.0 wt.-%, most preferably in the range from 4.0 to 10.0 wt.-%, based on the total weight of the polypropylene composition.

The polypropylene composition according to the invention is usually prepared by melt blending the components (A), (B), (C), (D) and (E), and the optional pigment masterbatch. Melt blending equipment and conditions are within the common skills in the art.

In particular, it is preferred to use a conventional compounding or blending apparatus, e.g. a Banbury mixer, a 2-roll rubber mill, Buss-co-kneader or a twin-screw extruder. More preferably, mixing is accomplished in a co-rotating twin-screw extruder.

The polymer materials, such as the polypropylene composition according to the invention, recovered from the extruder are usually in the form of pellets.

### Heterophasic propylene-ethylene copolymer (A)

The heterophasic propylene-ethylene copolymer (A) generally comprises a matrix phase and an elastomer phase dispersed therein.

The heterophasic propylene-ethylene copolymer (A) has a melt flow rate MFR₂ (230°C, 2.16 kg, ISO 1133) of 50 to 250 g/10 min, preferably 75 to 200 g/10min, more preferably 90 to 150 g/10min.

The heterophasic propylene-ethylene copolymer (A) can be characterized by the crystallization extraction (CRYSTEX) analysis. In the crystallization extraction (CRYSTEX) analysis a crystalline fraction (CF) and a soluble fraction (SF) are obtained which can be quantified and analysed in regard of the monomer and comonomer content as well as the intrinsic viscosity (iV).

The heterophasic propylene-ethylene copolymer (A) preferably shows one or all of the following properties in the crystallization extraction (CRYSTEX) analysis:
- a crystalline fraction (CF) content, determined by crystallization extraction (CRYSTEX) analysis, in the range from 72.5 to 95.0 wt.-%, preferably from 75.0 to 92.5 wt.-%, more preferably from 77.5 to 90.0 wt.-%; and
- a soluble fraction (SF) content, determined by crystallization extraction (CRYSTEX) analysis, in the range from 5.0 to 27.5 wt.-%, preferably in the range from 7.5 to 25.0 wt.-%, more preferably in the range from 10.0 to 22.5 wt.-%.

Said crystalline fraction (CF) preferably has one or more, preferably all of the following properties:
- an ethylene content (C2(CF)), as determined by quantitative NMR spectroscopy from crystallization extraction (CRYSTEX) analysis, of 0.1 to 5.0 wt.-%, preferably of 0.2 to 4.0 wt.-%, more preferably of 0.5 to 3.0 wt.-%; and/or
- an intrinsic viscosity (iV(CF)), determined from crystallization extraction (CRYSTEX) analysis, of less than 1.8 dl/g, preferably of 0.8 to 1.6 dl/g, more preferably of 0.9 to 1.3 dl/g.

Said soluble fraction (SF) preferably has one or more, preferably all of the following properties:
- an ethylene content (C2(SF)), as determined by quantitative NMR spectroscopy from crystallization extraction (CRYSTEX) analysis, in the range from 20.0 to 40.0 wt.-%, preferably from 22.5 to 37.5 wt.-%, more preferably from 25.0 to 35.0 wt.-%; and/or
- an intrinsic viscosity (iV(SF)), determined from crystallization extraction (CRYSTEX) analysis, of 1.50 to 4.00 dl/g, preferably of 1.65 to 3.75 dl/g, more preferably of 1.75 to 3.50 dl/g;.

The heterophasic propylene-ethylene copolymer (A) preferably has an ethylene content (C2(total)) in an amount of from 2.5 to 12.5 wt.-%, more preferably from 3.5 to 10.0 wt.-%, still more preferably from 5.0 to 9.0 wt.-%, determined by quantitative ¹³C-NMR spectroscopy from crystallization extraction (CRYSTEX) analysis.

The heterophasic propylene-ethylene copolymer (A) further preferably has one or more, preferably all, of the following properties:
- a melting temperature Tm of from 155 to 175°C, more preferably from 157 to 172°C, still more preferably from 160 to 170°C; and/or
- a crystallization temperature Tc of from 115 to 135°C, more preferably from 117 to 132°C, still more preferably from 119 to 130°C,
all of said temperatures being determined by differential scanning calorimetry (DSC).

The heterophasic propylene-ethylene copolymer (A) preferably shows a good balance of properties in regard of mechanical properties, impact properties and heat stability:

The heterophasic propylene-ethylene copolymer (A) preferably has a tensile modulus of from 1200 to 1750 MPa, more preferably from 1250 to 1700 MPa, still more preferably from 1300 to 1600 MPa.

Further the heterophasic propylene-ethylene copolymer (A) preferably has a Charpy Notched Impact Strength at 23°C (CNIS at 23°C) of from 1.0 to 10.0 kJ/m², more preferably from 2.0 to 7.5 kJ/m².

It is preferred that the heterophasic propylene-ethylene copolymer (A) consists of propylene units and ethylene units only.

Although not measured, the content of units derived from propylene (C3) in the soluble fraction (SF) preferably adds up to 100 wt.-% with the content of units derived from ethylene (C2) in the soluble fraction (SF).

The content of units derived from propylene (C3) in the soluble fraction (SF) is preferably 60.0 to 80.0 wt.-%, more preferably 62.5 to 77.5 wt.-%, still more preferably 65.0 to 75.0 wt.-%.

Although not measured, the content of units derived from propylene (C3) in the crystalline fraction (CF) preferably adds up to 100 wt.-% with the content of units derived from ethylene (C2) in the crystalline fraction (CF).

The content of units derived from propylene (C3) in the crystalline fraction (CF) is preferably 95.0 to 99.9 wt.-%, more preferably 96.0 to 99.8 wt.-%, still more preferably 97.0 to 99.5 wt.-%.

The total content of propylene (C3(total)) in the heterophasic propylene-ethylene copolymer (A) is preferably 87.5 to 97.5 wt.-%, more preferably 90.0 to 96.5 wt.-%, still more preferably 91.0 to 95.0 wt.-%.

The heterophasic propylene-ethylene copolymer (A) preferably is a virgin polymer.

Heterophasic propylene copolymers suitable as heterophasic propylene-ethylene copolymer (A) are commercially available.

Before blending with the other components for preparing the composition according to the invention the heterophasic propylene-ethylene copolymer (A) can be aerated, e.g. as described in EP 3 786 190 A1, for removing volatile components.

### Mixed Plastics Polypropylene Blend (B)

The mixed plastics polypropylene blend (B) is a polypropylene rich recycled material, meaning that it comprises significantly more polypropylene than polyethylene.

Preferably, the polypropylene rich recycled material is obtained from recycled waste by means of plastic recycling processes known in the art. Such recyclates are commercially available, e.g. from Corepla (Italian Consortium for the collection, recovery, recycling of packaging plastic wastes), Resource Plastics Corp. (Brampton, ON), Kruschitz GmbH, Plastics and Recycling (AT), Vogt Plastik GmbH (DE), Mtm Plastics GmbH (DE) etc. Non-exhaustive examples of polypropylene rich recycled materials include: Dipolen^{®}PP (Mtm Plastics GmbH), Axpoly^{®} recycled polypropylene pellets (Axion Ltd) and PolyPropylene Copolymer (BSP Compounds).

During recycling, any reasonable measure will usually be taken for any components other than polyethylene and polypropylene to be reduced/removed as far as the final application or use suggests such measures; however, other components are often present in small amounts.

Other such components include polystyrene (PS), polyamides (PA), polyethylene terephthalate (PET), which are all present in as low an amount as possible, preferably below the detection limit.

The mixed plastics polypropylene blend (B) has a melt flow MFR₂, determined according to ISO 1133 at 230 °C and 2.16 kg, in the range from 10.0 to 50.0 g/10 min, preferably from 15.0 to 47.5 g/10 min, more preferably from 20.0 to 45.0 g/10 min.

The mixed plastics polypropylene blend (B) can be characterized by the crystallization extraction (CRYSTEX) analysis. In the crystallization extraction (CRYSTEX) analysis a crystalline fraction (CF) and a soluble fraction (SF) are obtained which can be quantified and analysed in regard of the monomer and comonomer content as well as the intrinsic viscosity (iV).

The mixed plastics polypropylene blend (B) preferably shows one or all of the following properties in the crystallization extraction (CRYSTEX) analysis:
- a crystalline fraction (CF) content determined by crystallization extraction (CRYSTEX) analysis in the range from 70.0 to 97.5 wt.-%, preferably from 75.0 to 95.0 wt.-%, more preferably from 80.0 to 92.5 wt.-%; and
- a soluble fraction (SF) content determined by crystallization extraction (CRYSTEX) analysis in the range from 2.5 to 30.0 wt.-%, preferably from 5.0 to 25.0 wt.-%, more preferably from 7.5 to 20.0 wt.-%.

The crystalline fraction (CF) content and the soluble (SF) content of the mixed plastics polypropylene blend (B) only relate to its polymeric components, i.e. without other components, which are insoluble and therefore not part of the dissolution and crystallization cycles as described below in the determination method, such as inorganic residues.

The crystalline fraction (CF) content and the soluble (SF) content therefore are based on the weight amount of the polymeric components of the mixed plastics polypropylene blend (B).

Said crystalline fraction (CF) preferably has one or more, preferably all of the following properties:
- an ethylene content (C2(CF)), as determined by quantitative NMR spectroscopy from crystallization extraction (CRYSTEX) analysis, of 1.0 to 15.0 wt.-%, more preferably in the range of 2.0 to 10.0 wt.-%, still more preferably of 2.5 to 7.5 wt.-%; and/or
- an intrinsic viscosity (iV(CF)), determined from crystallization extraction (CRYSTEX) analysis, of from 1.00 to 2.10 dl/g, more preferably of 1.15 to 2.00 dl/g, still more preferably from 1.30 to 1.90 dL/g.

Said soluble fraction (SF) preferably has one or more, preferably all of the following properties:
- an ethylene content (C2(SF)), as determined by quantitative NMR spectroscopy from crystallization extraction (CRYSTEX) analysis, in the range from 15.0 to 50.0 wt.-%, preferably from 17.5 to 45.0 wt.-%, more preferably from 20.0 to 40.0 wt.-%; and/or
- an intrinsic viscosity (iV(SF)), determined from crystallization extraction (CRYSTEX) analysis, of 0.75 to 2.50 dl/g, preferably in the range of 0.90 to 2.25 dl/g, more preferably in the range of 1.00 to 2.00 dl/g.

The mixed plastics polypropylene blend (B) preferably has an ethylene content (C2(total)), determined by quantitative NMR spectroscopy from crystallization extraction (CRYSTEX) analysis, in an amount of from 0.5 to 25.0 wt.-%, more preferably from 1.0 to 20.0 wt.-%, still more preferably from 1.5 to 15.0 wt.-%.

The mixed plastics polypropylene blend (B) preferably has an inorganic residue content, as determined according to ISO 3451-1:2019, of 0.05 to 3.0 wt.-%, more preferably in the range from 0.1 to 2.5 wt.-%, most preferably in the range from 0.2 to 2.5 wt.-%

The mixed plastics polypropylene blend (B) preferably originates from post-industrial waste or post-consumer waste, most preferably from post-consumer waste.

The mixed plastics polypropylene blend (B) preferably has a limonene content, determined by solid phase microextraction (HS-SPME-GC-MS), in the range from 1 to 250 mg/m³.

The presence of limonene is indicative that the mixed plastics polypropylene blend (B) originates from household post-consumer waste.

Further indications of the recycled-nature of the mixed plastics polypropylene blend (B) include the presence of other polymers, such as polystyrene and polyamide-6, and the presence of fatty acids.

Accordingly, it is further preferred that the mixed plastics polypropylene blend (B) comprises one or more of polystyrene, polyamide-6 and fatty acids, preferably comprises each of polystyrene, polyamide-6 and fatty acids.

Before blending with the other components for preparing the composition according to the invention the mixed plastics polypropylene blend (B) can be aerated, e.g. as described in EP 3 786 190 A1, for removing volatile components.

### Elastomer (C)

The elastomer (C) is a copolymer of ethylene and one or more alpha-olefin comonomer(s) having from 4 to 10 carbon atoms, more preferably from 1-butene or 1-octene, most preferably from 1-octene.

Ethylene-based elastomers are usually added for further improving the impact properties of the composition.

The elastomer (C) has a melt temperature of from 100 to 135°C, preferably from 105 to 130°C, more preferably from 110 to 125°C, determined by differential scanning calorimetry (DSC) according to ISO 11357 / 1 in a heat / cool / heat cycle with a scan rate of 10 °C/min in the temperature range of -30 to +225°C.

Further, the elastomer (C) has a glass transition temperature Tg, determinable by Temperature Modulated Differential Scanning Calorimetry (TM-DSC) according to ISO 11357/1, of from -45 to -75°C, preferably from -50 to -70°C, more preferably from -55 to -67°C.

The elastomer (C) preferably has a difference of melting temperature and glass transition temperature Tm-Tg of from 125°C to 200°C, preferably from 150°C to 190°C, more preferably from 160°C to 185°C.

Further, the elastomer (C) preferably has a density, determined according to ISO 1183, of from 850 to 900 kg/m², preferably from 855 to 890 kg/m³, more preferably from 860 to 880 kg/m³.

Still further, the elastomer (C) preferably has a melt flow rate MFR₂, determined according to ISO 1133 at 2.16 kg and 190°C, of from 0.1 to 40 g/10 min, preferably from 0.2 to 30 g/10 min, more preferably from 0.3 to 20 g/10 min.

The elastomer (C) preferably has a block chain structure.

It is especially preferred that the elastomer (C) is a copolymer of ethylene and 1-octene with alternating segments having a low 1-octene content and a high 1-octene content.

Such ethylene-based plastomers are commercially available under the tradename Engage or Infuse.

### Inorganic Filler (D)

It is preferred that the inorganic filler (D) is selected from the group containing talc, calcium carbonate, barium sulfate, mica, and mixtures thereof.

Most preferably, the inorganic filler (D) is talc.

The inorganic filler, preferably talc, (D) preferably has a median particle size d₅₀ before compounding of 0.3 to 30.0 micrometers, more preferably 0.5 to 15.0 micrometers.

Further, the inorganic filler, preferably talc, (D) preferably has a top-cut particle size d₉₅ before compounding of 1.0 to 50.0 micrometers, preferably 1.5 to 35.0 micrometers.

The particle size is usually measured by Sedigraph measurement in accordance with ISO 13317-3 and is given in the technical data sheets of commercial grades.

Such inorganic fillers are commercially available.

### Additives (E)

The additives (E) are provided in an amount in the range from 0.1 to 5.0 wt.-%, preferably from 0.2 to 4.5 wt.-%, more preferably from 0.3 to 4.0 wt.-%, based on the total weight of the polypropylene composition. The skilled practitioner would be able to select suitable additives that are well known in the art.

The additives are preferably selected from antioxidants, UV-stabilizers, anti-scratch agents, mould release agents, acid scavengers, lubricants, anti-static agents, and mixtures thereof.

It is understood that the content of additives (E), given with respect to the total weight of the polypropylene composition, includes any carrier polymers used to introduce the additives to said polypropylene composition, i.e. masterbatch carrier polymers. An example of such a carrier polymer would be a polypropylene homopolymer in the form of powder.

### Pigment masterbatch

The composition of the invention is preferably a pigmented composition.

As such, a pigment masterbatch is provided in an amount in the range from 0.5 to 10.0 wt.-%, more preferably in the range from 2.0 to 10.0 wt.-%, most preferably in the range from 4.0 to 10.0 wt.-%, based on the total weight of the composition.

The pigment masterbatch may comprise one pigment, or it may comprise multiple pigments. When the pigment masterbatch comprises more than one pigment, the pigment masterbatch may be provided as multiple pigment masterbatches, each containing a single pigment, wherein the sum of the amounts of the individual pigment masterbatches equals the total weight of the pigment masterbatch according to the present invention.

The selection of the pigment depends on the intended colour of the composition. Beyond such considerations, the choice of suitable pigment is not restricted. The person skilled in the art would be able to select suitable pigment(s) to achieve a certain end colour of the composition.

### Article

In a second aspect, the present invention relates to an article comprising the composition as described above or below in an amount of from 90 to 100 wt.-%, preferably from 95 to 100 wt.-%, more preferably from 98 to 100 wt.-%, still more preferably from 99 to 100 wt.-%.

The article preferably is a moulded article, more preferably a moulded automotive article.

The article is preferably used for visible parts of a vehicle, or partly visible parts of a vehicle, such as potentially painted automotive exterior parts.

Thereby, preferably all aspects and properties of the polypropylene composition as described above and below are applicable in this aspect of present invention.

The articles prepared from the composition according to the invention show good dimensional stability in form of low isotropic area shrinkage.

It is preferred that the article has an isotropic area shrinkage of not more than 1.00 %, preferably not more than 0.80 %, more preferably not more than 0.60 %, determined on injection moulded samples.

### Use

In a third aspect, the present invention relates to the use of the polypropylene composition as described above or below for injection moulding of articles, preferably automotive articles, more preferably visible or partly visible parts of a vehicle, such as potentially painted automotive exterior parts.

Thereby, preferably all aspects and properties of the polypropylene composition and the article as described above and below are applicable in this aspect of present invention.

### Experimental Section

The following Examples are included to demonstrate certain aspects and embodiments of the invention as described in the claims. It should be appreciated by those of skill in the art, however, that the following description is illustrative only and should not be taken in any way as a restriction of the invention.

### Quantification of microstructure by NMR spectroscopy

Quantitative nuclear-magnetic resonance (NMR) spectroscopy was used to quantify the comonomer content of the polymers.

Quantitative ¹³C{¹H} NMR spectra recorded in the molten-state using a Bruker Avance III 500 NMR spectrometer operating at 500.13 and 125.76 MHz for ¹H and ¹³C respectively. All spectra were recorded using a ¹³C optimised 7 mm magic-angle spinning (MAS) probehead at 180°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {klimke06, parkinson07, castignolles09}. Standard single-pulse excitation was employed utilising the NOE at short recycle delays of 3 s {pollard04, klimke06} and the RS-HEPT decoupling scheme {fillip05,griffin07}. A total of 1024 (1k) transients were acquired per spectra.

Quantitative ¹³C{¹H} NMR spectra were processed, integrated and relevant quantitative properties determined from the integrals. All chemical shifts are internally referenced to the methyl isotactic pentad (*mmmm*) at 21.85 ppm.

Characteristic signals corresponding to the incorporation of 1-butene were observed {brandolini01} and the comonomer content quantified.

The amount of isolated 1-butene incorporated in PBP sequences was quantified using the integral of the αB2 sites at 43.6 ppm accounting for the number of reporting sites per comonomer: $B = {I}_{αB 2} / 2$

The amount of consecutively incorporated 1-butene in PBBP sequences was quantified using the integral of the ααB2B2 site at 40.5 ppm accounting for the number of reporting sites per comonomer: $BB = 2 * {I}_{ααB 2 B 2}$

In presence of BB the value of B must be corrected for the influence of the αB2 sites resulting from BB: $B = \left({I}_{αB 2}/2\right) - BB / 2$

The total 1-butene content was calculated based on the sum of isolated and consecutively incorporated 1-butene: ${B}_{total} = B + BB$

Characteristic signals corresponding to the incorporation of ethylene were observed {brandolini01} and the comonomer content quantified.

The amount of isolated ethylene incorporated in PEP sequences was quantified using the integral of the Sββ sites at 24.3 ppm accounting for the number of reporting sites per comonomer: $E = {I}_{Sββ}$

If characteristic signals corresponding to consecutive incorporation of ethylene in PEE sequence was observed the Sβδ site at 27.0 ppm was used for quantification: $EE = {I}_{Sβδ}$

Characteristic signals corresponding to regio defects were observed {resconi00}. The presence of isolated 2,1-erythro regio defects was indicated by the presence of the two methyl sites at 17.7 and 17.2 ppm, by the methylene site at 42.4 ppm and confirmed by other characteristic sites. The presence of 2,1 regio defect adjacent an ethylene unit was indicated by the two inequivalent Sαβ signals at 34.8 ppm and 34.4 ppm respectively and the Tγγ at 33.7 ppm.

The amount of isolated 2,1-erythro regio defects (P_{21e isolated}) was quantified using the integral of the methylene site at 42.4 ppm (Iₑ₉): ${P}_{21 e isolated} = {I}_{e 9}$

If present the amount of 2,1 regio defect adjacent to ethylene (P_{E21}) was quantified using the methine site at 33.7 ppm (I_{Tγγ}): ${P}_{E 21} = {I}_{Tγγ}$

The total ethylene content was then calculated based on the sum of ethylene from isolated, consecutively incorporated and adjacent to 2,1 regio defects: ${E}_{total} = E + EE + {P}_{E 21}$

The amount of propylene was quantified based on the Sαα methylene sites at 46.7 ppm including all additional propylene units not covered by Sαα e.g. the factor 3*P_{21e isolated} accounts for the three missing propylene units from isolated 2,1-erythro regio defects: ${P}_{total} = {I}_{Sαα} + 3 * {P}_{21 e isolated} + B + 0.5 * BB + E + 0.5 * EE + 2 * {P}_{E 21}$

The total mole fraction of 1-butene and ethylene in the polymer was then calculated as: $fB = {B}_{total} / \left({E}_{total}+{P}_{total}+{B}_{total}\right)$ $fE = {E}_{total} / \left({E}_{total}+{P}_{total}+{B}_{total}\right)$

The mole percent comonomer incorporation was calculated from the mole fractions: $B \left[mol%\right] = 100 * fB$ $E \left[mol%\right] = 100 * fE$

The weight percent comonomer incorporation was calculated from the mole fractions: $B \left[wt.-%\right] = 100 * \left(fB*56.11\right) / \left(\left(fE*28.05\right)+\left(fB*56.11\right)+\left(\left(1-\left(fE+fB\right)\right)*42.08\right)\right)$ $E \left[wt.-%\right] = 100 * \left(fE*28.05\right) / \left(\left(fE*28.05\right)+\left(fB*56.11\right)+\left(\left(1-\left(fE+fB\right)\right)*42.08\right)\right)$

The mole percent of isolated 2,1-erythro regio defects was quantified with respect to all propylene: $\left[21e\right] mol % = 100 * {P}_{21 e isolated} / {P}_{total}$

The mole percent of 2,1 regio defects adjacent to ethylene was quantified with respect to all propylene: $\left[E21\right] mol % = 100 * {P}_{E 21} / {P}_{total}$

The total amount of 2,1 defects was quantified as following: $\left[21\right] mol % = \left[21e\right] + \left[E21\right]$

Literature (as referred to above):

| | |
|---|---|
| klimke06 | Klimke, K., Parkinson, M., Piel, C., Kaminsky, W., Spiess, H.W., Wilhelm, M., Macromol. Chem. Phys. 2006;207:382. |
| parkinson07 | Parkinson, M., Klimke, K., Spiess, H.W., Wilhelm, M., Macromol. Chem. Phys. 2007;208:2128. |
| pollard04 | Pollard, M., Klimke, K., Graf, R., Spiess, H.W., Wilhelm, M., Sperber, O., Piel, C., Kaminsky, W., Macromolecules 2004;37:813. |
| filip05 | Filip, X., Tripon, C., Filip, C., J. Mag. Resn. 2005, 176, 239 |
| griffin07 | Griffin, J.M., Tripon, C., Samoson, A., Filip, C., and Brown, S.P., Mag. Res. in Chem. 2007 45, S1, S198. |
| castignolles09 | Castignolles, P., Graf, R., Parkinson, M., Wilhelm, M., Gaborieau, M., Polymer 50 (2009) 2373. |
| resconi00 | Resconi, L., Cavallo, L., Fait, A., Piemontesi, F., Chem. Rev. 2000, 100, 1253. |
| brandolini01 | A.J. Brandolini, D.D. Hills, "NMR spectra of polymers and polymer additives", Marcel Deker Inc., 2000 |

### Crystallization extraction (CRYSTEX) analysis

Note: Crystallization extraction (CRYSTEX) analyses the polymeric part of each component, with non-polymeric parts, such as any fillers or particulate pigments, not contributing to the reported CRYSTEX data presented.

### Determination of Crystalline and soluble fractions and their respective properties (iV and Ethylene content)

The crystalline (CF) and soluble fractions (SF) of the polypropylene compositions as well as the comonomer content and intrinsic viscosities of the respective fractions were analyzed by use of the Crystex (crystallization extraction) method. Potential instruments that can be used are Crystex QC or Crystex 42 (Polymer Char; Valencia, Spain). Details of the technique and the method can be found in literature (Ljiljana Jeremic, Andreas Albrecht, Martina Sandholzer & Markus Gahleitner (2020): Rapid characterization of high-impact ethylene-propylene copolymer composition by crystallization extraction separation: comparability to standard separation methods, International Journal of Polymer Analysis and Characterization, 25:8, 581-596).

The crystalline and amorphous fractions are separated through temperature cycles of dissolution at 160°C, crystallization at 40°C and re-dissolution in 1,2,4-trichlorobenzene at 160°C. Quantification of SF and CF and determination of ethylene content (C2) are achieved by means of an integrated infrared detector (IR4) and for the determination of the intrinsic viscosity (IV) an online 2-capillary viscometer is used.

IR4 detector is a multiple wavelength detector measuring IR absorbance at two different bands (CH3 stretching vibration (centred at app. 2960 cm⁻¹) and the CH stretching vibration (2700-3000 cm⁻¹) that are serving for the determination of the concentration and the Ethylene content in Ethylene-Propylene copolymers. IR4 detector is calibrated with series of 8 EP copolymers with known Ethylene content in the range of 2 wt.-% to 69 wt.-% (determined by 13C-NMR) and each at various concentrations, in the range of 2 and 13mg/ml. To encounter for both features, concentration and ethylene content at the same time for various polymer concentration expected during Crystex analyses the following calibration equations were applied:: Conc = a + b*Abs(CH) + c * (Abs(CH))2 + d*Abs(CH3) + e*(Abs(CH3)2) + f*Abs(CH)*Abs(CH3) (Equation 1) CH3/1000C = a + b*Abs(CH) + d * (Abs(CH3)/Abs(CH)) + e * (Abs(CH3)/Abs(CH))2 (Equation 2)

The constants a to e for equation 1 and a to f for equation 2 were determined by using least square regression analysis.

The CH₃/1000C is converted to the ethylene content in wt.-% using following relationship: $Wt . - % \left(Ethylene in EP Copolymers\right) = 100 - {CH}_{3} / 1000 TC * 0.3$ (Equation 3)

Amounts of Soluble Fraction (SF) and Crystalline Fraction (CF) are correlated through the XS calibration to the "Xylene Cold Soluble" (XCS) quantity and respectively Xylene Cold Insoluble (XCI) fractions, determined according to standard gravimetric method as per ISO16152. XS calibration is achieved by testing various EP copolymers with XS content in the range 2-31 wt.-%. The determined XS calibration is linear: $Wt . - % XS = 1 , 01 * Wt . - % SF$ (Equation 4)

Intrinsic viscosity (IV) of the parent EP copolymer and its soluble and crystalline fractions are determined with a use of an online 2-capillary viscometer and are correlated to corresponding IV's determined by standard method in decalin according to ISO 1628-3. Calibration is achieved with various EP PP copolymers with IV = 2-4 dL/g. The determined calibration curve is linear: $IV \left(dL/g\right) = a * Vsp / c$ (Equation 5)

The samples to be analyzed are weighed out in concentrations of 10mg/ml to 20mg/ml. To avoid injecting possible gels and/or polymers which do not dissolve in TCB at 160°C, like PET and PA, the weighed out sample was packed into a stainless steel mesh MW 0,077/D 0,05mmm.

After automated filling of the vial with 1,2,4-TCB containing 250 mg/l 2,6-tert-butyl-4-methylphenol (BHT) as antioxidant, the sample is dissolved at 160°C until complete dissolution is achieved, usually for 60 min, with constant stirring of 400rpm. To avoid sample degradation, the polymer solution is blanketed with the N2 atmosphere during dissolution.

A defined volume of the sample solution is injected into the column filled with inert support where the crystallization of the sample and separation of the soluble fraction from the crystalline part is taking place. This process is repeated two times. During the first injection the whole sample is measured at high temperature, determining the IV[dl/g] and the C2[wt.%] of the PP composition. During the second injection the soluble fraction (at low temperature) and the crystalline fraction (at high temperature) with the crystallization cycle are measured (wt.-% SF, wt.-% C2, IV).

### Intrinsic viscosity

The intrinsic viscosity (iV) is measured according to DIN ISO 1628/1, October 1999, in Decalin at 135°C.

### Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer.

The MFR₂ of polypropylene is determined at a temperature of 230 °C and a load of 2.16 kg.

The MFR₂ of polyethylene is determined at a temperature of 190 °C and a load of 2.16 kg.

### Density:

The density is measured according to ISO 1183-1. Sample preparation is done by compression moulding in accordance with ISO 1872-2:2007.

### Differential Scanning Calorimetry (DSC)

A TA Instruments Q200 Differential Scanning Calorimeter calibrated with Indium, Zinc, and Tin according to ISO 11357/1 and operating under 50 mL/min of nitrogen flow was used on 5-7 mg samples. The employed thermal program consisted of a first heating step from -30°C to 225°C to erase the previous thermal history and a cooling step at 10 °C/min. The melting behavior was obtained by performing a second heating scan from - 30°C to 225 °C at 10 °C/min. The crystallization and melting temperatures were taken as the peak values from the cooling and second heating scan respectively. The relevant DSC trace was integrated from 50°C to the end of the melting or crystallization peak to evaluate the melting enthalpy or crystallization enthalpy.

### Temperature Modulated Differential Scanning Calorimetry

Temperature Modulated Differential Scanning Calorimetry (TM-DSC) experiments were run on a TA Instruments Q2000 device calibrated with Indium, Zinc, and Tin according to ISO 11357/1. The measurements were run under nitrogen atmosphere (50 mL min-1) on 5±1 mg samples. The employed thermal program consisted of a first heating step run at 50°C/min, from -85°C to 180°C to erase the previous thermal history and a cooling step at 10 °C/min to -85°C. The glass transition temperature was obtained by performing a second heating scan to 30°C in modulated fashion, modulating 0.32°C every 60 seconds on top of a ramp conducted at 2 °C/min. The glass transition was measured as the inflection point on the reversing heat flow trace as calculated by the Universal Analysis software of TA Instruments.

### Flexural modulus

The flexural modulus was determined according to ISO 178 at a test speed of 2 mm/min and a force of 100 N, whereby the length of the span between the supports was 64 mm, on test specimens having a dimension of 80 x 10 x 4 mm³ (length x width x thickness) prepared by injection moulding according to ISO 19069-2.

### Tensile properties:

The tensile properties were measured according to ISO 527-2 (cross head speed = 1 mm/min; test speed 50 mm/min at 23 °C) using injection molded specimens 1A prepared as described in ISO 19069-2. The measurement was done after 96 h conditioning time at 23 °C of the specimen.

### Charpy Notched Impact Strength

was determined according to ISO 179-1 eA at +23 °C and at -20°C on injection molded specimens of 80 x 10 x 4 mm³ prepared according to ISO 19069-2. The measurement was done after 96 h conditioning time at 23 °C of the specimen.

### Instrumented Puncture Test

Instrumented puncture test was performed on 60 x 60 x 3 mm³ injection-molded plaques at 23°C and -30°C according to ISO 6603-2. The measurement was done after 96 h conditioning time at 23 °C of the specimen.

### Inorganic residues

Inorganic residues are quantified according to ISO 3451-1:2019 using a Perkin Elmer TGA 8000. Approximately 10-20 mg of material was placed in a platinum pan. The temperature was equilibrated at 50°C for 10 minutes, and afterwards raised to 950°C under nitrogen at a heating rate of 20 °C/min. The ash content was evaluated as the weight % at 850°C.

### Limonene detection

Limonene quantification can be carried out using solid phase microextraction (HS-SPME-GC-MS) by standard addition.

50 mg ground samples are weighed into 20 mL headspace vials and after the addition of limonene in different concentrations and a glass-coated magnetic stir bar, the vial is closed with a magnetic cap lined with silicone/PTFE. Micro capillaries (10 pL) are used to add diluted limonene standards of known concentrations to the sample. Addition of 0, 2, 20 and 100 ng equals 0 mg/kg, 0.1 mg/kg, 1mg/kg and 5 mg/kg limonene, in addition standard amounts of 6.6 mg/kg, 11 mg/kg and 16.5 mg/kg limonene is used in combination with some of the samples tested in this application. For quantification, ion-93 acquired in SIM mode is used. Enrichment of the volatile fraction is carried out by headspace solid phase microextraction with a 2 cm stable flex 50/30 pm DVB/Carboxen/PDMS fiber at 60°C for 20 minutes. Desorption is carried out directly in the heated injection port of a GCMS system at 270°C.

### GCMS Parameters:

Column: 30 m HP 5 MS 0.25*0.25
Injector: Splitless with 0.75 mm SPME Liner, 270°C
Temperature program: -10°C (1 min)
Carrier gas: Helium 5.0, 31 cm/s linear velocity, constant flow
MS: Single quadrupole, direct interface, 280°C interface temperature
Acquisition: SIM scan mode
Scan parameter: 20-300 amu
SIM Parameter: m/Z 93, 100 ms dwell time

### Coefficient of linear thermal expansion (CLTE)

The coefficient of linear thermal expansion (CLTE) was determined in accordance with ISO 11359-2:1999 on 10 mm long pieces cut 20 from the same injection moulded specimens as used for the tensile modulus determination. The measurement was performed in a temperature range from -30 to +80°C at a heating rate of 1 °C/min in machine direction and transverse direction, respectively.

### Isotropic area shrinkage

The area shrinkage was calculated from shrinkage data determined on circular sector plates of 320 mm radius, 20 ° opening angle and 2.8 mm thickness produced by injection moulding with an Engel ES 1350/350 machine and filled through a rectangular gate of 7.6 x 2.8 mm² at the base of the sector. Test specimens of the accordant dimensions can also be cut from samples of injection moulded articles, such as injection moulded automotive articles. A melt temperature of 240 °C, a mould temperature of 25 °C and a filling time of 3.5 s were used, followed by a holding time of 20 s at a holding pressure of 400 bar.

Instead of measuring the external dimension of the plates, a pattern of circular dots was generated on the plates by eroded spots of 1 mm diameter at distances between 5 and 10 mm. The original pattern is recorded immediately after de-moulding by an OGP Smartscope Flash 400 optical gauging system and used as dimensional reference. After 96 h at 23 °C, the post-shrinkage moulding pattern is determined and all deviations of point-to-point distances are recorded. For calculating the isotropic area shrinkage, a number of measuring points is connected by vectors and the resulting area determined, with A being the area after 96 h and A₀ the area before that period. The isotropic area shrinkage, Sᵢₛₒ, is then calculated as ${S}_{iso} = 1 - \sqrt{\frac{\sum A}{\sum {A}_{0}}}$

### Experiments

### Heterophasic propylene-ethylene copolymer HECO (A)

### Catalyst system

The catalyst used for producing HECO (A) was a Ziegler-Natta catalyst commercially available from Lyondell Basell (IT), under the trade name ZN180M.

HECO (A) was made in prepolymerization / loop reactor / gas phase reactor 1 / gas phase reactor 2 configuration followed by a pelletization step.

For HECO (A) the catalyst system defined above was used in combination with triethylaluminium (TEAL) as co-catalyst and dicyclopentadienyl-dimethoxy silane (donor D) as external donor.

The polymerization conditions as shown in Table 1.

**Table 1: Polymerization conditions for the HECO (A)**

| | | **HECO (A)** |
|---|---|---|
| **Prepolymerization** | | |
| [Co]/[ED] | [mol/mol] | 10 |
| [Co]/[Ti] | [mol/mol] | 220 |
| Temperature | [°C] | 30 |
| Residence time | [min] | 5 |

| **Loop Reactor** | | |
|---|---|---|
| Temperature | [°C] | 75 |
| Split | [wt.-%] | 52 |
| H2/C3 | [kg/ton] | 22 |
| MFR₂ | [g/10 min] | 160 |

| **1^{st} Gas Phase Reactor** | | |
|---|---|---|
| Temperature | [°C] | 80 |
| Split | [wt.-%] | 34 |
| H2/C3 | [mol/kmol] | 175 |
| MFR₂ | [g/10 min] | 160 |
| XCS | [wt.-%] | 2.0 |

| **2^{nd} Gas Phase Reactor** | | |
|---|---|---|
| Temperature | [°C] | 80 |
| Split | [wt.-%] | 14 |
| H2/C3 | [mol/kmol] | 250 |
| C2/C3 | [mol/kmol] | 550 |
| MFR₂ | [g/10 min] | 99 |
| C2 | [wt.-%] | 6.5 |

| **Final Properties (Pellet)** | | |
|---|---|---|
| MFR₂ | [g/10 min] | 100 |
| C2 | [wt.-%] | 6.0 |
| SF (CRYSTEX) | [wt.-%] | 14.5 |
| C2(SF) | [wt.-%] | 32 |
| iV(SF) | [dL/g] | 1.9 |
| CF (CRYSTEX) | [wt.-%] | 85.5 |
| C2(CF) | [wt.-%] | 2 |
| iV(CF) | [dL/g] | 1.15 |
| Tₘ | [°C] | 165 |
| T_{c} | [°C] | 121 |

The polymer powder of HECO (A) from the 2^{nd} gas phase reactor was compounded in a co-rotating twin-screw extruder Coperion ZSK 47 at 220°C with 0.15 wt.-% antioxidant (Irganox B215FF from BASF AG, Germany; this is a 1:2-mixture of Pentaerythrityltetrakis(3-(3',5'-di-tert. butyl-4-hydroxyphenyl)-propionate, CAS-no. 6683-19-8, and Tris (2,4-di-t-butylphenyl) phosphite, CAS-no. 31570-04-4); 0.05 wt.-% of Ca-stearate (CAS-no.1592-23-0, commercially available from Faci, Italy).

### Mixed-plastics polypropylene blend (B)

The properties of the mixed-plastic polypropylene blend, being a post-consumer recycling blend of household origin, are given in Table 2.

**Table 2: Properties of mixed-plastic polypropylene blends**

| | | **Blend (B)** |
|---|---|---|
| MFR₂ | [g/10 min] | 40 |
| C2(total) | [wt.-%] | 5.7 |
| iV(total) | [dL/g] | |
| SF | [wt.-%] | 10 |
| C2(SF) | [wt.-%] | 25.7 |
| iV(SF) | [dL/g] | 1.11 |
| CF | [wt.-%] | 90 |
| C2(CF) | [wt.-%] | 3.4 |
| iV(CF) | [dL/g] | 1.41 |
| Limonene content | [mg/m³] | 6-128 |
| Ash content | [wt.-%] | 0.9-1.7 |

### Compounding of Inventive and Comparative Polypropylene Compositions

The inventive and comparative compositions were prepared based on the recipes indicated in Table 3 by compounding in a co-rotating twin-screw extruder Coperion ZSK 40 at 220°C.

In addition to the HECOs and the mixed-plastic polypropylene blend described above, the following commercially available components were also employed:

| | |
|---|---|
| Elastomer (C-1) | an elastomeric ethylene-1-octene copolymer with a trade name of Engage 11567, commercially available from Dow Chemicals (USA), having an MFR₂ (190 °C) of 1.0 g/10 min and a density of 866 kg/m³, a Tm of 121 °C and a Tg of -62 °C (TM-DSC) (according to the invention) |
| Elastomer (C-2) | an elastomeric ethylene-1-octene copolymer with a trade name of Engage HM 7487, commercially available from Dow Chemicals (USA), having an MFR₂ (190 °C) of <0.5 g/10 min and a density of 860 kg/m³, a Tm of 37 °C and a Tg of -56 °C (TM-DSC) (comparative) |
| Elastomer (C-3) | an elastomeric ethylene-1-butene copolymer with a trade name of Engage 7467, commercially available from Dow Chemicals (USA), having an MFR₂ (190 °C) of 1.2 g/10 min and a density of 862 kg/m³, a Tm of 34 °C and a Tg of -56 °C (TM-DSC) (comparative) |
| Elastomer (C-4) | an elastomeric ethylene-1-octene copolymer with a trade name of Queo 6201 LA-P, commercially available from Borealis AG, having an MFR₂ (190 °C) of 1.0 g/10 min and a density of 862 kg/m³, a Tm of 40 °C (comparative) |
| Filler (D) | talc with a trade name of HAR T84, commercially available from Imerys (France), with median diameter d50 of 2.0 µm and top cut diameter d95 of 10.0 µm |
| Black MB | a polyethylene based masterbatch CBMB LD-09 A02 from Borealis AG (Norway). It contains 40 wt.-% of pigment. |
| Additives MB | an additive masterbatch, consisting of 1.30 wt.-% of a carrier propylene homopolymer with a trade name of HC001 A, commercially available from Borealis AG (Austria), 0.2 wt.-% of an antioxidant with a trade name of Irganox 1076 (CAS-no. 2082-79-3), commercially available from BASF AG (Germany), 0.2 wt.-% of an anti-slip agent with a trade name of FINAWAX-O, commercially available from Fine Organics (India) |

The recipes of the inventive and comparative polypropylene compositions are given in Table 3.

Table 4 shows the properties of the examples.

**Table 3: Compositions of the examples**

| | | **IE1** | **CE2** | **CE3** |
|---|---|---|---|---|
| HECO (A) | [wt.-%] | 31.8 | 31.8 | 31.8 |
| Blend (B) | [wt.-%] | 20.0 | 20.0 | 20.0 |
| Elastomer (C-1) | [wt.-%] | 23.0 | - | - |
| Elastomer (C-2) | [wt.-%] | - | 11.0 | - |
| Elastomer (C-3) | [wt.-%] | - | 12.0 | - |
| Elastomer (C-4) | [wt.-%] | - | - | 23.0 |
| Filler (D) | [wt.-%] | 22.0 | 22.0 | 22.0 |
| Black MB + Additives MB | [wt.-%] | 3.2 | 3.2 | 3.2 |

**Table 4: Properties of the examples**

| | | **IE1** | **\| CE1** | **\| CE2** |
|---|---|---|---|---|
| **CRYSTEX** | | | | |
| C2(total) | [wt.-%] | 29.0 | 26.1 | 29.0 |
| iV(total) | [dL/g] | 1.58 | 1.58 | 1.52 |
| CF (CRYSTEX) | [wt.-%] | 75.2 | 60.4 | 61.2 |
| C2(CF) | [wt.-%] | 20.0 | 4.3 | 4.9 |
| iV(CF) | [dL/g] | 1.45 | 1.29 | 1.30 |
| SF (CRYSTEX) | [wt.-%] | 24.8 | 39.6 | 38.8 |
| C2(SF) | [wt.-%] | 59.7 | 60.9 | 67.5 |
| iV(SF) | [dL/g] | 1.92 | 1.94 | 1.78 |

| **Properties:** | | | | |
|---|---|---|---|---|
| MFR₂ | [g/10 min] | 19.4 | 17.1 | 20.3 |
| Flexural modulus | [MPa] | 1727 | 1776 | 1762 |
| Tensile modulus | [MPa] | 1559 | 1575 | 1585 |
| Tensile stress at yield | [MPa] | 17.1 | 16.7 | 17.3 |
| Tensile strain at break | [%] | 398 | 55 | 71 |
| Charpy NIS, +23°C | [kJ/m²] | 47.3 | 47.1 | 49.1 |
| Charpy NIS, -20°C | [kJ/m²] | 9.3 | 9.6 | 9.6 |
| Puncture energy, +23°C | [J] | 35.8 | 34.3 | 35.1 |
| Puncture energy, -30°C | [J] | 33.8 | 26.7 | 29.9 |
| CLTE, -33/80°C, MD | [µm/m°C] | 50 | 47 | 53 |
| CLTE, -33/80°C, MD | [µm/m°C] | 40 | 38 | 42 |
| Radial isotropic shrinkage | [%] | 0.46 | 0.47 | 0.46 |

It can be seen that the polypropylene composition according to the invention shows improved toughness and impact properties in the instrumented puncture test, especially at low temperatures (puncture energy, -30°C) and tensile strain at break, whereas all other properties are comparable.

## Claims

1. A polypropylene composition obtainable by blending at least components (A) to (E):
(A) from 15.0 to 45.0 wt.-%, preferably from 20.0 to 40.0 wt.-%, more preferably from 25.0 to 35.0 wt.-%, based on the total weight of the polypropylene composition, of a heterophasic propylene-ethylene copolymer having a melt flow rate MFR₂, determined according to ISO 1133 at 230°C and 2.16 kg, in the range of from 50 to 250 g/10 min, preferably from 75 to 200 g/10 min, more preferably from 90 to 150 g/10 min;
(B) from 7.5 to 35.0 wt.-%, preferably from 10.0 to 30.0 wt.-%, more preferably from 15.0 to 25.0 wt.-%, based on the total weight of the polypropylene composition, of a mixed plastics polypropylene blend originating from post-consumer waste and/or post-industrial waste and having a melt flow rate MFR₂, determined according to ISO 1133 at 230°C and 2.16 kg, in the range of from 10.0 to 50 g/10 min, preferably from 15.0 to 47.5 g/10 min, more preferably from 20.0 to 45.0 g/10 min;
(C) from 15.0 to 35.0 wt.-%, preferably from 17.5 to 32.5 wt.-%, more preferably from 20.0 to 30.0 wt.-%, based on the total weight of the polypropylene composition, of an elastomer of ethylene and one or more alpha-olefin comonomer(s) having from 4 to 10 carbon atoms, having a melt temperature of from 100 to 135°C, preferably from 105 to 130°C, more preferably from 110 to 125°C, determined by differential scanning calorimetry (DSC) according to ISO 11357 / 1 in a heat / cool / heat cycle with a scan rate of 10 °C/min in the temperature range of -30 to +225°C; and a glass transition temperature Tg, determinable by Temperature Modulated Differential Scanning Calorimetry (TM-DSC) according to ISO 11357/1, of from -45 to - 75°C, preferably from -50 to -70°C, more preferably from -55 to -67°C;
(D) from 10.0 to 35.0 wt.-%, preferably from 15.0 to 32.5 wt.-%, more preferably from 17.5 to 30.0 wt.-%, based on the total weight of the polypropylene composition, of an inorganic filler;
(E) from 0.1 to 5.0 wt.-%, preferably from 0.2 to 4.5 wt.-%, more preferably from 0.3 to 4.0 wt.-% of additives,
wherein components (A), (B), (C), (D) and (E) make up from 90.0 to 100 wt.-%, preferably from 90.0 to 99.9 wt.-% of the polypropylene composition.

2. The polypropylene composition according to claim 1, wherein the elastomer (C) has one or more or all of the following properties:
• a density, determined according to ISO 1183, of from 850 to 900 kg/m², preferably from 855 to 890 kg/m³, more preferably from 860 to 880 kg/m³;
• a melt flow rate MFR₂, determined according to ISO 1133 at 2.16 kg and 190°C, of from 0.1 to 40 g/10 min, preferably from 0.2 to 30 g/10 min, more preferably from 0.3 to 20 g/10 min;
• a difference of melting temperature and glass transition temperature Tm-Tg of from 125°C to 200°C, preferably from 150°C to 190°C, more preferably from 160°C to 185°C.

3. The polypropylene composition according to claims 1 or 2, wherein the elastomer (C) comprises a block chain structure.

4. The polypropylene composition according to any one of the preceding claims,
wherein the elastomer (C) is a copolymer of ethylene and 1-octene with alternating segments having a low 1-octene content and a high 1-octene content.

5. The polypropylene composition according to any one of the preceding claims,
wherein the heterophasic propylene-ethylene copolymer (A) has one or more or all of the following properties:
• an ethylene content (C2(total)), determined by quantitative ¹³C-NMR spectroscopy from crystallization extraction (CRYSTEX), in the range from 2.5 to 12.5 wt.-%, preferably from 3.5 to 10.0 wt.-%, more preferably from 5.0 to 9.0 wt.-%;
• a crystalline fraction (CF) content, determined by crystallization extraction (CRYSTEX) analysis, in the range from 72.5 to 95.0 wt.-%, preferably from 75.0 to 92.5 wt.-%, more preferably from 77.5 to 90.0 wt.-%;
• a soluble fraction (SF) content, determined by crystallization extraction (CRYSTEX) analysis, in the range from 5.0 to 27.5 wt.-%, preferably from 7.5 to 25.0 wt.-%, more preferably from 10.0 to 22.5 wt.-%;
said soluble fraction (SF) having
• an intrinsic viscosity of the soluble fraction (iV(SF)), determined from crystallization extraction (CRYSTEX) analysis, in the range from 1.50 to 4.00 dL/g, preferably from 1.65 to 3.75 dL/g, more preferably from 1.75 to 3.50 dL/g;
• an ethylene content of the soluble fraction (C2(SF)), determined by quantitative NMR spectroscopy from crystallization extraction (CRYSTEX) analysis, of from 20.0 to 40.0 wt.-%, preferably from 22.5 to 37.5 wt.-%, more preferably from 25.0 to 35.0 wt.-%.

6. The polypropylene composition according to any one of the preceding claims, wherein the mixed plastics polypropylene blend (B) has one or more or all of the following properties:
• an ethylene content (C2(total)), determined by quantitative NMR spectroscopy from crystallization extraction (CRYSTEX), in the range from 0.5 to 25.0 wt.-%, preferably from 1.0 to 20.0 wt.-%, more preferably from 1.5 to 15.0 wt.-%;
• a crystalline fraction (CF) content, determined by crystallization extraction (CRYSTEX) analysis, of the polymeric part in the range from 70.0 to 97.5 wt.-%, preferably from 75.0 to 95.0 wt.-%, more preferably from 80.0 to 92.5 wt.-%; said crystalline fraction (CF) having
• an intrinsic viscosity (iV(CF)), determined from crystallization extraction (CRYSTEX) analysis, in the range from 1.00 to 2.10 dL/g, preferably from 1.15 to 2.00 dL/g, more preferably from 1.30 to 1.90 dL/g;
• an ethylene content (C2(CF)), determined by quantitative NMR spectroscopy from crystallization extraction (CRYSTEX) analysis, of from 1.0 to 15.0 wt.-%, preferably from 2.0 to 10.0 wt.-%, more preferably from 2.5 to 7.5 wt.-%
• a soluble fraction (SF) content, determined by crystallization extraction (CRYSTEX) analysis, of the polymeric part in the range from 2.5 to 30.0 wt.-%, preferably from 5.0 to 25.0 wt.-%, more preferably from 7.5 to 20.0 wt.-%; said soluble fraction (SF) having
• an intrinsic viscosity (iV(SF)), determined from crystallization extraction (CRYSTEX) analysis, in the range from 0.75 to 2.50 dL/g, preferably from 0.90 to 2.25 dL/g, more preferably from 1.00 to 2.00 dL/g;
• an ethylene content (C2(SF)), determined by quantitative NMR spectroscopy from crystallization extraction (CRYSTEX) analysis, of from 15.0 to 50.0 wt.-%, preferably from 17.5 to 45.0 wt.-%, more preferably from 20.0 to 40.0 wt.-%.

7. The polypropylene composition according to any one of the preceding claims, wherein the inorganic filler (D) is talc, more preferably has one or more or all of the following properties before compounding:
• median diameter (d₅₀), determined according to ISO 13317-3 (sedigraph), in the range from 0.3 to 30.0 micrometers, more preferably 0.5 to 15.0 micrometers;
• a top cut diameter (d₉₅), determined according to ISO 13317-3 (sedigraph), in the range from 1.0 to 50.0 micrometers, preferably 1.5 to 35.0 micrometers.

8. The polypropylene composition according to any one of the preceding claims having one or more or all of the following properties:
• a melt flow rate MFR₂, determined according to ISO 1133 at 230°C and 2.16 kg, in the range of from 5.0 to 40.0 g/10 min, preferably from 7.5 to 35.0 g/10 min, more preferably from 10.0 to 30.0 g/10 min;
• an ethylene content (C2(total)), determined by quantitative ¹³C-NMR spectroscopy from crystallization extraction (CRYSTEX), in the range from 20.0 to 40.0 wt.-%, preferably from 22.5 to 37.5 wt.-%, more preferably from 25.0 to 35.0 wt.-%;
• an intrinsic viscosity (iV(total), determined from crystallization extraction (CRYSTEX) analysis, in the range from 1.00 to 2.10 dL/g, preferably from 1.15 to 2.00 dL/g, more preferably from 1.30 to 1.90 dL/g;
• a crystalline fraction (CF) content, determined by crystallization extraction (CRYSTEX) analysis, of the polymeric part in the range from 62.5 to 85.0 wt.-%, preferably from 65.0 to 82.5 wt.-%, more preferably from 62.5 to 80.0 wt.-%; said crystalline fraction (CF) having
• an intrinsic viscosity (iV(CF)), determined from crystallization extraction (CRYSTEX) analysis, in the range from 0.90 to 2.00 dL/g, preferably from 1.05 to 1.90 dL/g, more preferably from 1.20 to 1.80 dL/g;
• an ethylene content (C2(CF)), determined by quantitative NMR spectroscopy from crystallization extraction (CRYSTEX) analysis, of from 7.5 to 30.0 wt.-%, preferably from 10.0 to 27.5 wt.-%, more preferably from 12.5 to 25.0 wt.-%;
• a soluble fraction (SF) content, determined by crystallization extraction (CRYSTEX) analysis, of the polymeric part in the range from 15.0 to 37.5 wt.-%, preferably from 17.5 to 35.0 wt.-%, more preferably from 20.0 to 32.5 wt.-%; said soluble fraction (SF) having
• an intrinsic viscosity (iV(SF)), determined from crystallization extraction (CRYSTEX) analysis, in the range from 1.25 to 2.50 dL/g, preferably from 1.40 to 2.35 dL/g, more preferably from 1.60 to 2.20 dL/g;
• an ethylene content (C2(SF)), determined by quantitative NMR spectroscopy from crystallization extraction (CRYSTEX) analysis, of from 45.0 to 70.0 wt.-%, preferably from 47.5 to 67.5 wt.-%, more preferably from 50.0 to 65.0 wt.-%.

9. The polypropylene composition according to any one of the preceding claims having one or more or all of the following properties:
• a flexural modulus, determined according to ISO 178 using 80 x 10 x 4 mm³ injection moulded specimens prepared according to ISO 19069-2, of from 1250 to 2000 MPa, preferably from 1500 to 1900 MPa, more preferably from 1650 to 1850 MPa;
• a tensile modulus, determined according to ISO 527-2 using of tensile type 1A prepared in accordance with ISO 19069-2, of from 1100 to 1850 MPa, preferably from 1250 to 1750 MPa, more preferably from 1400 to 1650 MPa;
• a tensile stress at yield, determined according to ISO 527-2 using injection moulded specimens of tensile type 1A prepared in accordance with ISO 19069-2, of from 10.0 to 25.0 MPa, preferably from 12.5 to 22.5 MPa, more preferably from 15.0 to 20.0 MPa;
• a nominal tensile strain at break, determined according to ISO 527-2 using injection moulded specimens of tensile type 1A prepared in accordance with ISO 19069-2, of from 150 to 600 %, preferably from 200 to 550 %, more preferably from 250 to 500 %.

10. The polypropylene composition according to any one of the preceding claims having one or more or all of the following properties:
• a Charpy notched impact strength at 23°C, determined according to ISO 179/1eA using 80 x 10 x 4 mm³ injection moulded specimens prepared according to ISO 19069-2, of from 35.0 to 60.0 kJ/m², preferably from 40.0 to 55.0 kJ/m², more preferably from 42.5 to 52.5 kJ/m²;
• a Charpy notched impact strength at -20°C, determined according to ISO 179/1eA using 80 x 10 x 4 mm³ injection moulded specimens prepared according to ISO 19069-2, of from 3.5 to 15.0 kJ/m², preferably from 5.0 to 12.5 kJ/m², more preferably from 7.5 to 11.5 kJ/m².

11. The polypropylene composition according to any one of the preceding claims having one or more or all of the following properties:
• a puncture energy of from 25.0 to 65.0 J, preferably from 30.0 to 60.0 J, more preferably from 32.5 to 55.0 J, determined in the instrumented falling weight test according to ISO 6603-2 at 23 °C;
• a puncture energy of from 20.0 to 65.0 J, preferably from 22.5 to 60.0 J, more preferably from 25.0 to 55.0 J, determined in the instrumented falling weight test according to ISO 6603-2 at -30 °C;
• a coefficient of linear thermal expansion in machine direction from -30 to + 80 °C (CLTE-MD, -30 to +80°C) of from 25 to 65 µm/mK, preferably from 30 to 60 µm/mK, more preferably from 35 to 55 µm/mK;
• a coefficient of linear thermal expansion in transverse direction from -30 to + 80 °C (CLTE-TD, -30 to +80°C) of from 20 to 55 µm/mK, preferably from 25 to 50 µm/mK, more preferably from 30 to 45 µm/mK.

12. The polypropylene composition according to any one of the preceding claims having a relation of nominal tensile strain at break (TSB) and puncture energy at - 30°C (PE (-30°C)) according to the following formula: $TSB \left[{%}^{- 1}\right] > 2.0 ⋅ PE \left(-30°C\right) \left[{J}^{- 1}\right] + 50.0$ (I) preferably $TSB \left[{%}^{- 1}\right] > 4.0 ⋅ PE \left(-30°C\right) \left[{J}^{- 1}\right] + 50.0$ (Ia) more preferably $TSB \left[{%}^{- 1}\right] > 6.0 ⋅ PE \left(-30°C\right) \left[{J}^{- 1}\right] + 50.0$ (Ib).

13. An article, preferably a moulded article, more preferably a moulded automotive article comprising the polypropylene composition according to any one of the preceding claims, preferably in an amount of from 90 to 100 wt.-%, preferably from 95 to 100 wt.-%, more preferably from 98 to 100 wt.-%, still more preferably from 99 to 100 wt.-%.

14. The article according to claim 13 having an isotropic area shrinkage of not more than 1.00 %, preferably not more than 0.80 %, more preferably not more than 0.60 %, determined on injection moulded samples .

15. Use of the polypropylene composition according to any one of claims 1 to 12 for injection molding of articles, preferably automotive articles, more preferably visible or partly visible parts of a vehicle, such as potentially painted automotive exterior parts.
